# EUROPÄISCHE PATENTSCHRIFT

(11) **EP 0 628 155 B1**
(45) Veröffentlichungstag und Bekanntmachung des Hinweises auf die Patenterteilung: **20.12.1995**
(21) Anmeldenummer: 93903962.4
(22) Anmeldetag: 12.02.1993
(51) Int. Cl.: G01D 5/24, G01P 15/125

(54) **SCHALTUNGSANORDNUNG FÜR EINEN GEBER**
CIRCUIT FOR A TRANSDUCER
CIRCUIT POUR TRANSDUCTEUR

(30) Priorität: 27.02.1992 DE 4205989
(43) Veröffentlichungstag der Anmeldung: 14.12.1994
(73) Patentinhaber: VDO Adolf Schindling AG, 60326 Frankfurt/Main (DE)
(72) Erfinder: GRULER, Martin, D-78554 Aixheim (DE)
(86) Internationale Anmeldenummer: EP9300342
(87) Internationale Veröffentlichungsnummer: WO9317302

(56) Entgegenhaltungen:
- EP-A- 0 196 735
- DE-A- 3 528 416
- DE-A- 4 032 828
- GB-A- 2 046 920
- PATENT ABSTRACTS OF JAPAN vol. 6, no. 8 (P-98)(886) 19. Januar 1982 & JP-A 56135113

## Beschreibung

Die vorliegende Erfindung betrifft eine Schaltungsanordnung gemäß dem Oberbegriff des Patentanspruchs 1, ausgehend von DE-A-3 528 416.

Zur Auswertung von Sensorsignalen sind verschiedene Schaltungsanordnungen bekannt, wie z. B. Brücken- und Ladungsverstärkerschaltungen. Diese Schaltungstypen bedingen für die mikrocomputergerechte Signalaufbereitung zumeist einen größeren apparativen Aufwand und sind deshalb nicht allzu kostengünstig. Bekannt sind auch in einem LC-Schwingkreis betriebene Sensorschaltungen, die ein Frequenzsignal bereitstellen, das von einem nachgeschalteten Mikroprozessor für die weitere Signalverarbeitung zwar direkt ausgewertet werden kann, aber sie haben den Nachteil, daß sich auf derartige Schwingkreisanordnungen Temperatureinflüsse in erheblicher Weise auswirken, so daß eine nachgeschaltete Temperaturkompensation in den meisten Anwendungen erforderlich ist.

Mit dem Gegenstand der vorliegenden Anmeldung soll ein neuer Weg zur prozessorgerechten Aufbereitung von Sensorsignalen beschritten werden, der insbesondere der Eignung für Kfz-Geberanwendungen gerecht wird. Unter einem Geber soll hier eine Vorrichtung verstanden werden, die als Baugruppe sowohl das eigentliche Sensorelement als auch eine erste, das elektrische Sensormeßsignal auswertende elektronische Schaltungsanordnung enthält, um ein transportfähiges, d. h. auch über größere Distanzen übertragbares Meßsignal am Geberausgang bereitzustellen. Die besonderen Kfz-Belange beziehen sich sowohl auf das rauhe Milieu, in welchem der Geber betrieben wird, wie beispielsweise extreme Temperatureinwirkungen, als auch auf die Forderung nach der Eignung für eine kostengünstige Massenfertigung.

Der Erfindung liegt daher die Aufgabe zugrunde, eine sehr einfache und damit kostengünstige, Temperatureinflüsse selbst kompensierende Auswerteschaltung für Sensorsignale eines kapazitiven Gebers zu schaffen, wobei das Sensorelement eine sehr geringe Kapazität aufweisen kann und die Schaltung an ihrem Ausgang ein transportfähiges, elektrisches Signal abgibt, das für einen Mikroprozessor ohne weitere Signalwandlung auswertbar ist.

Die Aufgabe wird durch die kennzeichnenden Merkmale des Patentanspruchs 1 gelöst.

Die erfindungsgemäße Schaltung kann mit einfachsten Mitteln extrem kostengünstig aufgebaut werden. Das PWM-Ausgangssignal ist auch über grönere Distanzen ohne Beeinträchtigung des Informationsgehaltes übertragbar. Das Ausgangssignal ist digital, ein A/D-Wandler ist also nicht erforderlich. Die den Informationsgehalt der Sensormeßgröße tragende Pulsdauer kann auf einfachste Weise im Mikroprozessor ausgewertet werden. Z. B. kann die Auswertung derart erfolgen, daß die Dauern von Impuls und Pause einer Periode mit zwei Zählern des Prozessors ermittelt werden. Anschließend bildet der Prozessor in einem einfachen Rechenschritt das Teilungsverhältnis als Maß für die Auslenkung der als Biegeschwinger ausgeführten, beweglichen Mittelelektrode. Bei Bedarf ist das Ausgangssignal durch einen einfachen RC-Tiefpaß in ein analoges Spannungssignal umwandelbar.

Je nach Art des verwendeten Differentialmeßwertaufnehmers ist mit dieser Schaltung eine trimmbare, sehr geringe Nichtlinearität erreichbar. Diesbezügliche nachträgliche Meßsignalkorrekturen können für viele Anwendungen entfallen. Das Differential-Kondensatorprinzip wirkt bei störenden Umwelteinflüssen eigenkompensierend, so daß z. B. die Temperaturdrift äußerst gering ist. Im praktischen Schaltungsaufbau sind prinzipbedingt ohne zusätzliche Maßnahmen eine hohe Temperaturstabilität und eine sehr hohe Auflösung des Meßsignals erreichbar. Die Schaltung weist einen sehr geringen Eigenstromverbrauch auf und benötigt auch nur eine unipolare Spannungsquelle (VCC), die bei Verwendung von CMOS-Bauelementen einen weiten Versorgungsspannungsbereich zuläßt. Da die Schaltung in ihrer Realisierung nur aus sehr wenigen Bauelementen besteht, ist sie für Anwendungen mit geringem Raumangebot gut geeignet. Ferner ist die Schaltung sowohl für den dynamischen als auch den statischen Meßbetrieb verwendbar.

Anhand von 6 Figuren soll der Gegenstand der Anmeldung nun weiter erläutert werden.

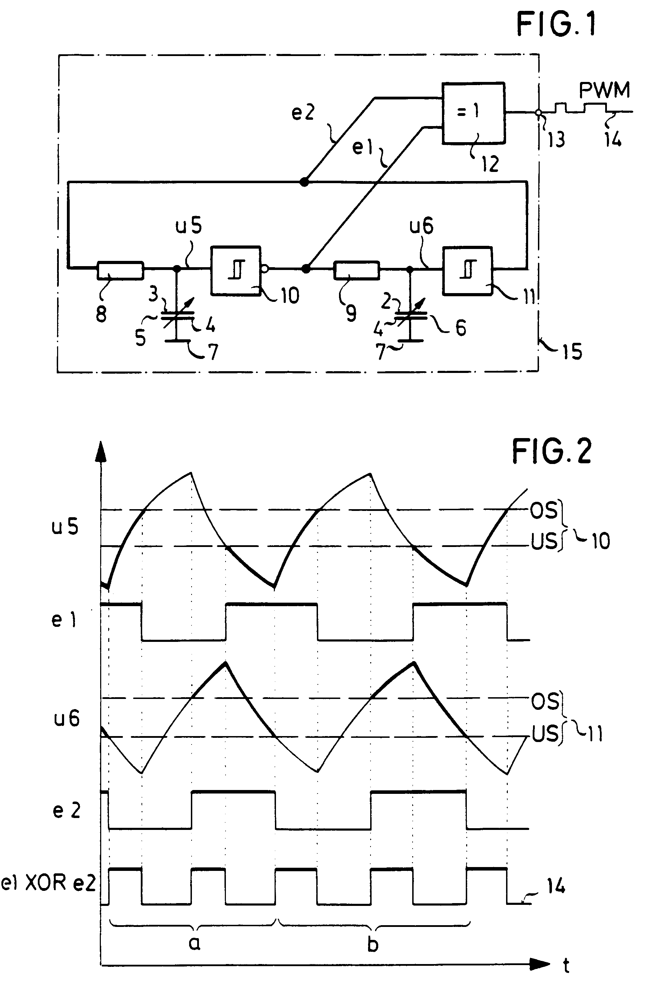

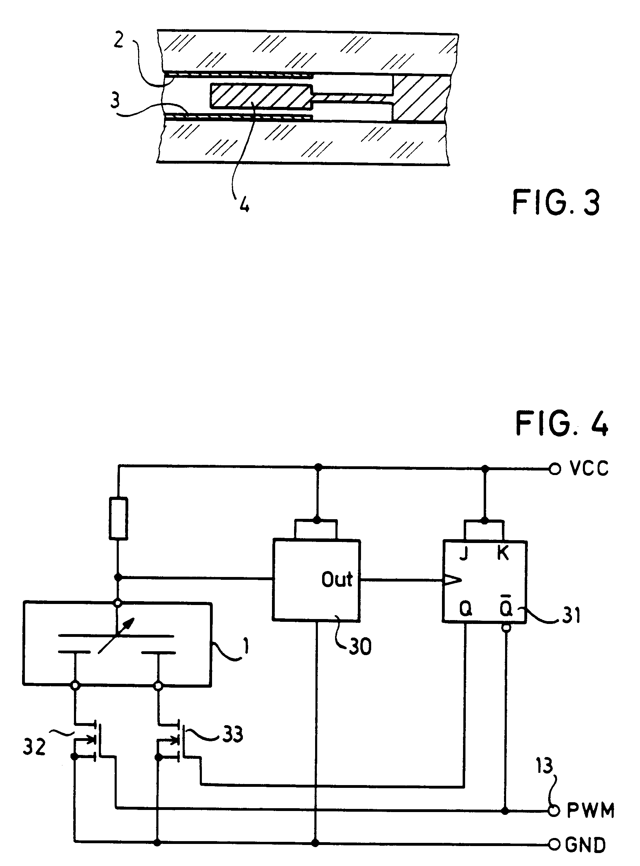

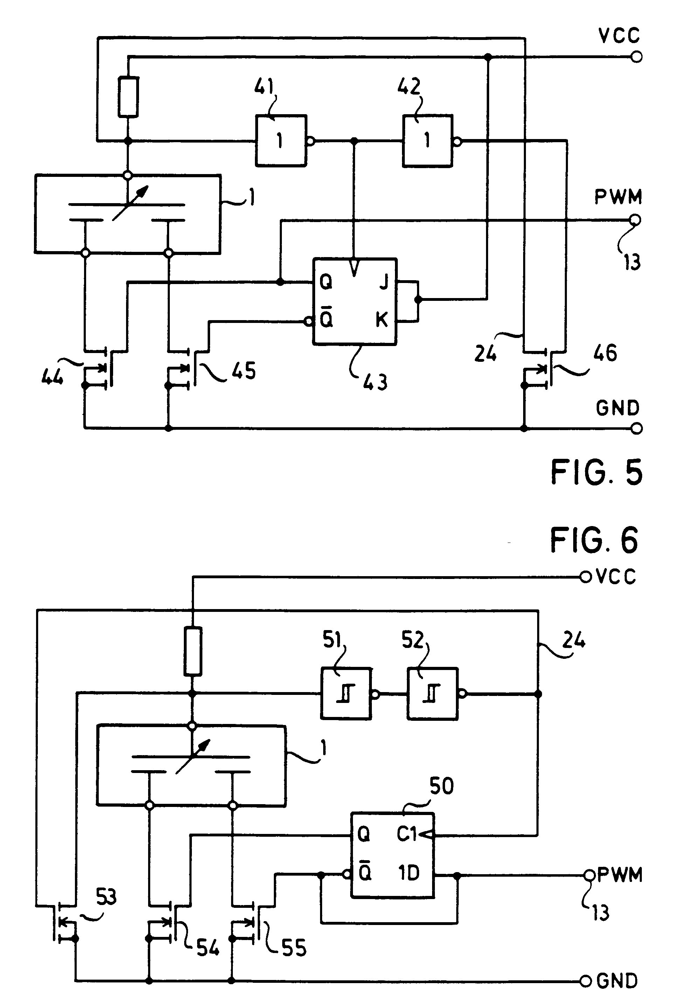

Die Fig. 1 zeigt einen Schaltungsaufbau der erfindungsgemäßen Lösung gemäß Anspruch 1, und in Fig. 2 ist exemplarisch ein dazugehöriger Signalverlauf dargestellt. Die Fig. 3 zeigt eine mögliche Ausführung des kapazitiven Differentialmeßwertaufnehmers im Längsschnitt, wobei nur das Funktionsprinzip verdeutlicht werden soll. Die Figuren 4 bis 6 zeigen alternative Ausführungsbeispiele der erfindungsgemäßen Lösung.

In der Schaltungsanordnung nach Fig. 1 besitzt der kapazitive Differentialmeßwertaufnehmer 1 zwei in der Meßanordnung feststehende Elektroden 2 und 3 und zwischen diesen eine bewegliche Mittelelektrode 4, auf die die zu sensierende, nicht elektrische, physikalische Meßgröße einwirkt. Durch diese konstruktive Anordnung werden die beiden Teilkondensatoren 5 und 6 gebildet. Die Mittelelektrode 4 ist in diesem Beispiel mit dem gemeinsamen Nullpotential bzw. dem Masseanschluß 7 der Geberschaltung 15 verbunden. Nur zum besseren Verständnis des der Schaltungsanordnung zugrunde liegenden Funktionsprinzips wurde in der Fig. 1 der Differentialmeßwertaufnehmer 1 in Form von zwei veränderbaren Teilkondensatoren 5 und 6 dargestellt.

Wenn die zu sensierende Meßgröße auf die Mittelelektrode 4 einwirkt, werden die Abstandsverhältnisse in der Kondensatoranordnung verändert, was zu einer gegenläufigen Kapazitätsveränderung bei den beiden Teilkondensatoren 5 und 6 führt. Damit verändern sich auch die Ladezeiten der Kondensatoren 5 und 6 im Verhältnis der einwirkenden Meßgröße.

Der Teilkondensator 5 bildet zusammen mit dem hochohmigen Widerstand 8 ebenso ein RC-Glied wie der Teilkondensator 6 mit dem hochohmigen Widerstand 9. Die aus der RC-Kombination 5 und 8 resultierende Ladezeit bestimmt den Schaltzeitpunkt des invertierenden Schwellwertdetektors 10. Für die RC-Kombination 6 und 9 gilt entsprechendes in bezug auf den nicht invertierenden Schwellwertdetektor 11. Ändern sich aufgrund einer Auslenkung der Mittelelektrode 4 die Ladezeiten, verschieben sich auch die Schaltzeitpunkte der Schwellwertdetektoren 10 und 11. Aufgrund der ringförmigen Zusammenschaltung beider RC-Oszillatoren triggern sich diese gegenseitig. Durch die Auswertung der Signalverläufe e1 und e2 jeweils hinter den beiden Kippschaltungen mittels einer Antivalenzverknüpfung 12 entsteht an deren Ausgang, der direkt zum Signalabgriff 13 der Geberschaltung 15 führt, ein PWM-Signal 14.

Die beschriebene Schaltung enthält demnach als charakterisierende Bauelemente zwei Schwellwertdetektoren 10 und 11 und ein Gatter für eine Antivalenzverknüpfung 12. Im praktischen Schaltungsaufbau werden die beiden Schwellwertdetektoren 10 und 11 vorzugsweise, wie in der Fig. 1 durch das Schaltzeichen kenntlich gemacht, durch Schmitt-Trigger realisiert.

Die die Funktion dieser Schaltungsanordnung bestimmenden Elemente sind a) die beiden gekoppelte RC-Oszillatoren 6 und 9 respektive 5 und 8, wobei jeweils der eine Oszillator in der Rückkopplung des anderen Oszillators angeordnet ist, b) zwei die beiden Oszillatoren jeweils miteinander verbindende Schmitt-Trigger 10 und 11, wobei einer der beiden Schmitt-Trigger 10 zusätzlich eine Pegelinvertierung bewirkt, und c) ein nachgeordnetes Gatter 12 zur logischen antivalenten Verknüpfung der beiden am Ausgang der Schmitt-Trigger 10 und 11 anstehenden Teilsignale el und e2.

Es sind also zwei Zeitglieder in Reihe geschaltet. Die nachgeordneten Schmitt-Trigger reagieren sowohl auf eine positive als auch auf eine negative Änderung von kontinuierlich an ihrem jeweiligen Eingang anstehende Spannungspegel u5 und u6. In der Folge ergibt sich eine zeitverzögerte Umschaltung der an den beiden Eingängen der Antivalenzverknüpfung 12 anliegenden Spannungspegel e1 und e2, sobald u5 bzw. u6 die obere Schaltschwelle OS von einem der beiden Schmitt-Trigger überschreitet respektive die untere Schaltschwelle US unterschreitet, wobei die Umschaltzeitpunkte durch die RC-Glieder bestimmt werden. Die Schwingfrequenz dieser Schaltungsanordnung unterliegt aufbaubedingt der Bedingung C1 + C2 = konst.

Ein pulsweitenmoduliertes Ausgangssignal 14 entsteht bei dieser Schaltungsanordnung erst durch die logische Verknüpfung der beiden Teilsignale e1 und e2. Das hier beschriebene Lösungsprinzip setzt demnach zwingend die Antivalenzverknüpfung 12 voraus, um ein brauchbares Meßsignal zu erzeugen.

Wie in der Fig. 2 am Signalverlauf erkennbar ist, bedarf es zur Erfassung einer vollen Schwingungsperiode der beiden Teilkondensatoren, dh eines Auf- und Entladezyklus, jeweils der Auswertung von zwei Perioden des Signals e1 XOR e2. Um also ein der Meßgröße proportionales PWM-Signal zu erhalten, ist es bei diesem Schaltungstyp erforderlich, einen Doppelimpuls auszuwerten, der sich jeweils aus zwei vollen Schwingungsperioden a und b zusammensetzt.

Dadurch unterscheidet sich dieser Schaltungstyp von den anderen Schaltungsanordnungen nach den Figuren 4 bis 6, wenn auch jeweils dieselbe Aufgabe gelöst wird. Insbesondere besteht die Schaltung nach Fig. 1 nicht aus monostabilen Kippschaltungen, welche auch Monoflops oder Univibratoren genannt werden. Die Schaltungsanordnung nach Fig. 1 arbeitet weder mit Triggerimpulsen, dh sie reagiert nicht flankengesteuert, sondern auf kontinuierliche Pegeländerungen, noch erfolgt ein selbständiges Zurückspringen in einen Ausgangszustand nach Ablauf der RC-Zeit. Ein brauchbares Meßsignal ergibt sich erst nach der Verknüpfung der Teilsignale e1 und e2.

Die Schaltungsanordnung nach Fig. 1 eignet sich in vorteilhafter Weise für einen besonders einfachen diskreten Aufbau. Da nur wenige, und dazu ausschließlich nur Standardbauelemente benötigt werden, kann ein extrem kostengünstiger und platzsparender Aufbau realisiert werden. Bekanntermaßen sind komplexere Bauelemente wie Monoflops teurer als einfache Schmitt-Trigger.

Die Erfüllung der genannten Forderungen ist gerade für Auswerteschaltungen in Kfz-Gebern unverzichtbar. Wegen des äußerst begrenzten Einbauraumes müssen die Schaltungen miniaturisierbar sein, weshalb nur einfache, dh nur wenige Bauelemente benötigende Lösungsprinzipien in Frage kommen.

Die Fig. 4 bis 6 offenbaren einen von dem bisher diskutierten Funktionsprinzip abweichenden Schaltungstyp. Er ist dadurch gekennzeichnet, daß hier zur Auswertung des Sensorsignals nur ein einziger Signalweg beschritten wird.

Mittels zwei niederohmiger Schalter, dh vorzugsweise - wie dargestellt - durch Feldeffekt-Transistoren 32, 33 bzw. 44, 45 bzw. 54, 55 wird die Meßspannung aus einem Oszillator RC1 oder RC2, wobei C1 und C2 die beiden Teilkapazitäten des Sensorelements sind und R ein gegen die Betriebsspannung geschalteter hochohmiger Widerstand ist, durch die beiden komplementär zueinander verriegelten Ausgänge eines flankengesteuerten, bistabilen Elementes 31 bzw. 43 bzw. 50 - in den Figuren jeweils durch ein Flip-Flop dargestellt - wechselweise auf eine Kippschaltung 30 bzw. 41 bzw. 51 geschaltet. Diese Merkmalskombination wiederholt sich in allen drei genannten Figuren.

Die am Oszillator abgegriffene Meßspannung wirkt auch rückkoppelnd über ein verschiedentlich ausgebildetes Netzwerk auf den Takteingang des bistabilen Elementes, um am Ausgang der Schaltungsanordnung 13 einen Impuls (PWM) für ein der zu messenden Spannung porportionales Zeitintervall anstehen zu lassen.

Die Schaltungsanordnungen gemäß den Fig. 4 bis 6 sind in besonderer Weise geeignet, Temperatureinflüsse selbständig zu kompensieren. Bekanntlich beeinflußt das temperaturbedingte Driften der Schaltschwellen von Kippgliedern besonders nachhaltig die mit einer Auswerteschaltung erzielbare Meßgenauigkeit. Die hier offenbarten Schaltungen enthalten jedoch nur eine einzige für das Meßergebnis relevante Schaltschwelle von ein und demselben Bauelement. Das Sensorsignal wird wechselweise auf diesen Schalteingang gegeben. Driftet die Schaltschwelle temperaturbedingt, werden beide Teilsignale aus dem Oszillator RC1 und RC2 gleichermaßen betroffen. Außerdem ist bei in der Praxis relevanten Anwendungen die Umschaltfrequenz so groß, daß während einer Meßperiode eintretende Änderungen des Schaltschwellenwertes praktisch ohne Auswirkung bleiben. Deshalb zeigt dieser Schaltungstyp ein besonders vorteilhaftes Temperaturverhalten.

Der kapazitive Differentialmeßwertaufnehmer 1 gemäß der Fig. 3 kann z. B. ein Beschleunigungssensor sein. Wird der Beschleunigungssensor dann noch mikromechanisch in Silizium ausgebildet, ergeben sich in Verbindung mit der erfindungsgemäßen Schaltung eine Reihe besonderer Vorteile, da beides leicht integrierbar und miteinander kombinierbar ist, so daß ein sehr kompakter Aufbau geschaffen werden kann.

Obwohl der erfindungsgemäße Schaltungsaufbau vorzugsweise zur Auswertung sehr kleiner kapazitiver Sensoren (C < 10pF) konzipiert ist, besteht für die beschriebene Lösung keine grundsätzliche Beschränkung auf diese Anwendung. Derartige Differentialmeßwertaufnehmer 1 können auch für andere physikalische Meßgrößen zum Einsatz kommen, z. B. zur Druck- oder Kraftmessung. Die besondere Bauart des Differentialmeßwertaufnehmers 1 ist letztlich für die Anwendung der erfindungsgemäßen Lösung nicht entscheidend, ob beispielsweise die Mittelelektrode 4 zwischen den beiden Elektroden 2 und 3 drehbar gelagert ist, so daß unterschiedliche Teilflächen der Mittelelektrode 4 mit den feststehenden Elektroden 2 und 3 zur Deckung kommen, oder ob vom konstruktiven Aufbau ein Biege-, Membran- oder Plattenschwinger gewählt wird.

## Patentansprüche

1. Schaltungsanordnung für einen Geber, insbesondere für einen Beschleunigungsgeber, mit einem Differentialmeßwertaufnehmer (1) geringer Kapazität zur Aufbereitung der Meßsignale des Differentialmeßwertaufnehmers (1) zu einem übertragungsfähigen Signal am Ausgang (13) der Schaltungsanordnung, gekennzeichnet
durch die Kombination
a. von zwei gekoppelten RC-Oszillatoren (6) und (9) respektive (5) und (8), wobei jeweils der eine Oszillator in der Rückkopplung des anderen Oszillators angeordnet ist und die Kapazität dieser Oszillatoren jeweils durch eine der beiden Teilkapazitäten des Differentialmeßwertaufnehmers (1) gebildet wird,
b. mit zwei die beiden Oszillatoren jeweils miteinander verbindende bistabile Kippschaltungen (10) und (11), wobei eine der beiden Kippschaltungen (10) zusätzlich eine Pegelinvertierung bewirkt,
c. und mit einem nachgeordneten Gatter (12) zur antivalenten Verknüpfung der beiden am Ausgang der Kippschaltungen (10) und (11) anstehenden Teilsignale e1 und e2, so daß am Ausgang (13) des Gatters (12) ein der Meßgröße entsprechendes logisches Doppelimpulssignal (14) bereitgestellt wird.

2. Schaltungsanordnung nach Anspruch 1, dadurch gekennzeichnet, daß die bistabilen Kippschaltungen durch Schmitt-Trigger realisiert sind.

3. Schaltungsanordnung nach Anspruch 1 oder 2, dadurch gekennzeichnet, daß die bistabilen Kippschaltungen zur weitgehend störungsfreien Auswertung sehr kleiner Kapazitäten über sehr hohe Eingangswiderstände verfügen.

## Claims

1. A circuit arrangement for a transmitter, in particular for an acceleration transmitter, having a differential measuring sensor (1) of low capacitance for conditioning the measured signals of the differential measuring sensor (1) to give a transmissible signal at the output (13) of the circuit arrangement, characterized by the combination
a. of two coupled RC oscillators (6) and (9) and (5) and (8) respectively, in each case the one oscillator being arranged in the feedback loop of the other oscillator and the capacitance of these oscillators in each case being formed by one of the two capacitance elements of the differential measuring sensor (1),
b. with two bistable multivibrators (10) and (11) each connecting the two oscillators to one another, one of the two multivibrators (10) additionally bringing about a level inversion,
c. and with a downstream gate (12) for an exclusive OR link of the two signal portions e1 and e2 applied across the outputs of the multivibrators (10) and (11), with the result that a logical double pulse signal (14) corresponding to the measuring variable is provided at the output (13) of the gate (12).

2. A circuit arrangement according to Claim 1, characterized in that the bistable multivibrators are in the form of Schmitt triggers.

3. A circuit arrangement according to Claim 1 or 2, characterized in that the bistable multivibrators, for the purpose of evaluation of very small capacitances which is largely free from disruption, have very high input resistances.

## Revendications

1. Montage pour un transmetteur, tout particulièrement un détecteur d'accélération avec un capteur de paramètres de mesure différentiel (1) de faible capacité pour la mise en forme des signaux de mesure dudit capteur de paramètres de mesure différentiel (1) en un signal transmissible disponible à la sortie (13) du montage,
caractérisé par la combinaison
a. de deux oscillateurs RC couplés (6) et (9) respectivement (5) et (8), l'un de ces oscillateurs étant respectivement inséré dans le circuit de contre-réaction de l'autre oscillateur et la capacité de ces oscillateurs étant respectivement formée par l'une des deux capacités partielles du capteur de paramètres de mesure différentiel (1),
b. avec deux circuits bascules bistables (10) et (11) reliant les deux oscillateurs respectivement l'un à l'autre, l'un des deux circuits bascules (10) opérant, en plus, une inversion de niveau,
c. et avec une porte (12) couplée en aval pour l'enchaînement à anticoïncidence des deux signaux partiels el et e2 disponibles à la sortie des circuits bascules (10) et (11), si bien qu'à la sortie (13) de la porte (12) est fourni un signal logique à double impulsion (14)

2. Montage selon la revendication 1,
caractérisé par le fait
que les circuits bascules bistables sont réalisés avec des bascules de Schmitt.

3. Montage selon l'une quelconque des revendications 1 ou 2,
caractérisé par le fait
que, pour l'exploitation largement antiparasitée de très faibles capacités, les circuits bascules bistables disposent de très hautes résistances d'entrée.
